# EUROPEAN PATENT SPECIFICATION

(11) **EP 3 840 435 B1**
(45) Date of publication and mention of the grant of the patent: **19.03.2025**
(21) Application number: 20187889.9
(22) Date of filing: 27.07.2020
(51) Int. Cl.: H04W 4/80, H04M 1/72442

(54) **AUDIO PLAYING CONTROL METHOD AND DEVICE AND STORAGE MEDIUM**
VERFAHREN UND VORRICHTUNG ZUR STEUERUNG DER AUDIOWIEDERGABE UND SPEICHERMEDIUM
PROCÉDÉ ET DISPOSITIF DE COMMANDE DE LECTURE AUDIO ET SUPPORT D'INFORMATIONS

(30) Priority: 16.12.2019 CN 201911294472
(43) Date of publication of application: 23.06.2021
(73) Proprietor: Beijing Xiaomi Mobile Software Co., Ltd., Beijing 100085 (CN)
(72) Inventor: ZHANG, Pengfei, Beijing, Beijing 100085 (CN)
(74) Representative: dompatent von Kreisler Selting Werner - Partnerschaft von Patent- und Rechtsanwälten mbB

(56) References cited:
- EP-A1- 3 135 024
- CN-A- 108 769 387
- US-A1- 2011 250 932
- US-A1- 2017 086 233
- US-A1- 2019 327 551
- "CN108769387A - APPLICATION CONTROL METHOD AND ASSOCIATED DEVICE", 6 November 2018, machine translation, article ZHANG HAIPING: "CN108769387A - APPLICATION CONTROL METHOD AND ASSOCIATED DEVICE", XP055764086

## Description

### BACKGROUND

Audio can be played on many smart devices, such as using a smart mobile phone and a smart wearable device. When the smart mobile phone and the smart wearable device are used together with a True Wireless Stereo (TWS) earphone, it is very convenient for a user play or listen to the audio.

In a case where the mobile phone, the wearable device and the earphone exist at the same time, because the most TWS earphones can be only connected to one device, operations are generally more troublesome when the earphone is required to be switched to the wearable device from the mobile phone or switched to the mobile phone from the wearable device. For example, the user may have to enter such a more tedious process as settings => Bluetooth => select Bluetooth device => connection => playing audio, and the operation is not convenient to the user. EP3135024A1 discloses methods provided for managing connections of user devices. US20170086233A1 discloses a connection method for a multimedia playing device. US20190327551A1 discloses a wireless headphone system. CN108769387A discloses an application control method and an associated device. US20110250932A1 discloses a personal sound system including a wireless network supporting an ear-level module, a companion module and a phone.

### SUMMARY

The present disclosure relates to an audio play controlling method, device, and storage medium.

According to an aspect of the present disclosure, there is provided a method for audio play controlling, including:
acquiring connection state information of an earphone connection interface, in response to receiving an audio playing instruction;
establishing a connection with the earphone by performing an earphone connection control operation in response to the connection state information indicating that the earphone connection interface is in an unconnected state; and
controlling played audio data to be output through the earphone connection interface, and transmitting playing state information to other associated audio play controlling device synchronously.

Preferably, the method further includes: in response to the audio playing instruction indicating to acquire the audio data through a network, receiving a corresponding notification message to trigger a detection of the connection state of the earphone connection interface before acquiring the connection state information of the earphone connection interface.

Preferably, the acquiring connection state information of an earphone connection interface, in response to receiving an audio playing instruction, includes:
playing the instructed audio in response to the audio playing instruction;
acquiring the connection state information of the earphone, in response to detecting that an audio player is in a playing state.

Preferably, the playing the instructed audio in response to the audio playing instruction includes:
playing the instructed audio, in response to receiving a mirrored audio playing instruction transmitted from the other associated audio play controlling device, the mirrored audio playing instruction is transmitted after the other associated audio play controlling device receives the audio playing instruction.

The acquiring the connection state information of the earphone, in response to detecting that an audio player is in a playing state, includes:
acquiring the connection state information of the earphone, in response to detecting of a play synchronization event transmitted from the other associated audio play controlling device.

Preferably, the method further includes:
listening for a connection state of the earphone connection interface, including whether the earphone connection interface is in a connected state and/or whether a connected device is the present device in response to the earphone connection interface being in the connected state;
controlling the played audio data to be output through the earphone connection interface and synchronously transmitting the playing state information to the other associated audio play controlling device, in response to the connection state information indicating that the earphone connection interface is in the connected state, or in response to the connection state information indicating that the earphone connection interface is in the connected state and the connected device is the present device.

Preferably, the acquiring connection state information of an earphone connection interface, in response to receiving an audio playing instruction, includes:
transmitting an audio play waiting signal to make the audio player to be in a standby state, in response to receiving the audio playing instruction;
acquiring the connection state information of the earphone connection interface, in response to the audio player being in the standby state.

Preferably, the method is applied to a mobile phone or a wearable device;
the other associated audio play controlling device is the wearable device, in response to the method being applied to the mobile phone;
the other associated audio play controlling device is the mobile phone, in response to the method being applied to the wearable device.

According to another aspect of the present disclosure, there is provided an audio play controlling device, including:
an acquisition module configured to acquire connection state information of an earphone connection interface, in response to receiving an audio playing instruction;
an earphone connection control module configured to establish a connection with the earphone by performing an earphone connection control operation in response to the connection state information indicating that the earphone connection interface is in an unconnected state; and
an audio play controlling module configured to control played audio data to be output through the earphone connection interface, and transmit playing state information to other associated audio play controlling device synchronously.

Preferably, the acquisition module includes:
a receiving sub-module configured to, in response to that the audio playing instruction instructs to acquire the audio data through a network, receive a corresponding notification message to trigger a detection of the connection state of the earphone connection interface before acquiring the connection state information of the earphone connection interface.

Preferably, the device further includes:
an audio player configured to play the instructed audio in response to the audio playing instruction; and
the acquisition module is further configured to acquire the connection state information of the earphone, in response to detecting that the audio player is in a playing state.

Preferably, the audio player is further configured to play the instructed audio, in response to receiving a mirror audio playing instruction transmitted from the other associated audio play controlling device, the mirror audio playing instruction is transmitted after the other associated audio play controlling device receives the audio playing instruction.

The acquisition module is further configured to acquire the connection state information of the earphone, in response to detecting of a play synchronization event transmitted from the other associated audio play controlling device.

Preferably, the device further includes:
a listening sub-module configured to listen for a connection state of the earphone connection interface, and the connection state includes whether the earphone connection interface is in a connected state and/or whether a connected device is the present device in response to the earphone connection interface being in the connected state; and
the audio play controlling module is further configured to: control the played audio data to be output through the earphone connection interface and transmitting synchronously the playing state information to the other associated audio play controlling device, in response to the connection state information indicating that the earphone connection interface is in the connected state, or in response to the connection state information indicating that the earphone connection interface is in the connected state and the connected device is the present device.

Preferably, the acquisition module further includes:
a transmitting sub-module configured to transmit an audio play waiting signal to make the audio player to be in a standby state, in response to receiving the audio playing instruction;
an acquisition sub-module configured to acquire the connection state information of the earphone connection interface, in response to the audio player being in the standby state.

Preferably, the device is applied to a mobile phone or a wearable device;
the other associated audio play controlling device is the wearable device, in response to the method being applied to the mobile phone;
the other associated audio play controlling device is the mobile phone, in response to the method being applied to the wearable device.

According to yet another aspect of the present disclosure, there is provided an audio play controlling device, including:
a processor;
a non-transitory computer-readable storage medium for storing processor executable instructions;
wherein the processor is configured to perform the any one of methods described above.

According to a still further aspect of the present disclosure, there is provided a non-transitory computer readable storage medium having instructions stored thereon, which cause, as executed by a processor, the processor to perform the any one of the methods described above.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this description, illustrate embodiments consistent with the disclosure and, together with the description, serve to explain the principles of the disclosure.
FIG. 1 illustrates a flowchart of an audio play controlling method, according to some embodiments of the present disclosure.
FIG. 2 illustrates a flowchart of an audio play controlling method, according to some other embodiments of the present disclosure.
FIG. 3 illustrates a flowchart of a method for acquiring connection state information of an earphone connection interface included in the audio play controlling method, according to some embodiments of the present disclosure.
FIG. 4 illustrates a flowchart of a method for acquiring connection state information of an earphone connection interface included in the audio play controlling method, according to some other embodiments of the present disclosure.
FIG. 5 illustrates a schematic block diagram of a structure of an audio play controlling device, according to some embodiments of the present disclosure.
FIG. 6 illustrates a schematic block diagram of a structure of an audio play controlling device, according to some other embodiments of the present disclosure.
FIG. 7 illustrates a schematic diagram of a structure of an audio play controlling device, according to a yet some other embodiments of the present disclosure.
FIG. 8 illustrates a schematic block diagram of the audio play controlling device in an application scenario of mobile phone, according to an embodiment of the present disclosure.
FIG. 9 illustrates a schematic block diagram of the audio play controlling device in an application scenario of wearable device, according to an embodiment of the present disclosure.

In the drawings, the same or corresponding reference numerals may indicate the same or corresponding parts.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

It should be noted that, although the terms first, second, etc. can be used herein to describe various modules, steps, data, etc. in the embodiments of the present disclosure, these terms are only used to distinguish one module, step, data, etc. from another module, step, data, etc., instead of denoting a special order or degree of important. In fact, the terms "first" and "second" could be exchanged.

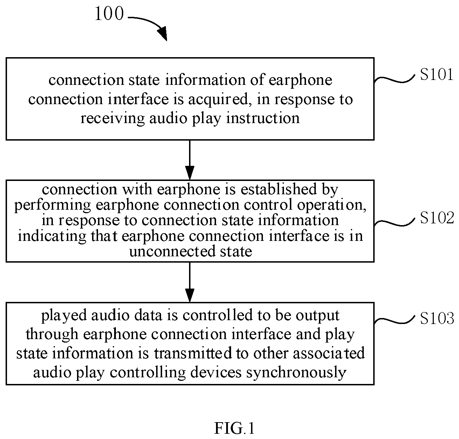

FIG. 1 illustrates a flowchart of an audio play controlling method, according to some embodiments of the present disclosure.

As illustrated in FIG. 1, the audio play controlling method 100 according to the embodiments of the present disclosure can include operating processes as follows.

In step S101, connection state information of an earphone connection interface is acquired, in response to receiving an audio playing instruction. For example, a user can determine whether an audio play controlling device (for example, a mobile phone) is connected to an earphone from the connection state information of the earphone, by acquiring the connection state information of the earphone connection interface.

In step S102, a connection with the earphone is established by performing an earphone connection control operation, in response to the connection state information indicating that the earphone connection interface is in an unconnected state. That is to say, the connection with the earphone is established by performing the earphone connection control operation when it is known, from the connection state information of the earphone, that the audio play controlling device (for example, the mobile phone) is not connected to the earphone.

In step S103, the played audio data is controlled to be output through the earphone connection interface and playing state information is transmitted to other associated audio play controlling devices synchronously. During the above operations, the audio player can be controlled to perform the audio play operation and the playing state information of the audio player can be transmitted to the other associated audio play controlling device synchronously. For example, a playing state of a device (for example, the mobile phone) which has been connected to the earphone can be synchronized to, for example, the wearable device through application synchronization (AppSync) in a form of application status (AppStatus). In actual applications, various states, including whether the earphone is currently connected to the audio play controlling device such as the mobile phone or the wearable device, which device the earphone is connected to and whether the earphone is worn, can be synchronized to the respective devices.

In some embodiments, the audio play signal described above can include a local audio play signal and an audio play signal acquired via a network.

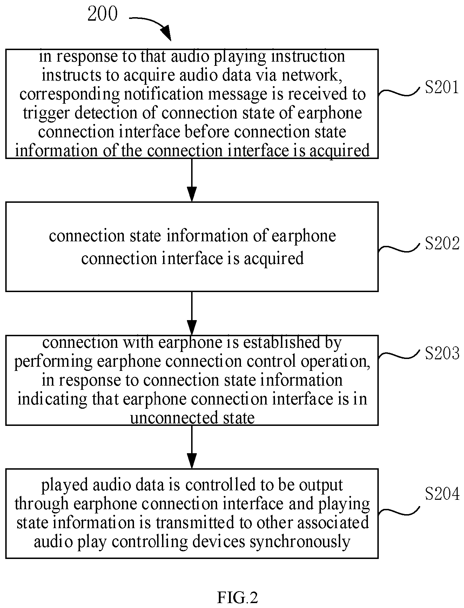

FIG. 2 illustrates a flowchart of an audio play controlling method, according to some other embodiments of the present disclosure.

As illustrated in FIG. 2, the audio play controlling method 200 in the embodiments of the present disclosure can include operating processes as follows.

In step S201, in response to that the audio playing instruction instructs to acquire the audio data via the network, a corresponding notification message is received to trigger a detection of the connection state of the earphone connection interface before the connection state information of the earphone connection interface is acquired. That is to say, when the audio play signal is the audio play signal (for example, QQ music) through the network, the corresponding notification message is received and thus the detection operation for the connection state of the earphone connection interface is triggered.

The operating processes of steps S202 to S204 illustrated in FIG. 2 are similar as those of steps S101 to S103, and thus are not described repetitively.

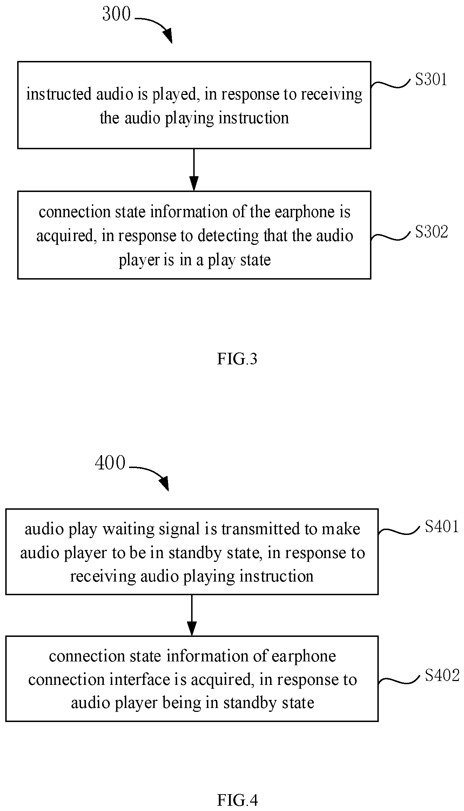

FIG. 3 illustrates a flowchart of a method for acquiring connection state information of an earphone connection interface included in the audio play controlling method, according to some embodiments of the present disclosure.

As illustrated in FIG. 3, in the method 300 for acquiring connection state information of the earphone connection interface, at first, in step S301, instructed audio is played, in response to receiving the audio playing instruction; subsequently, in step S302, the connection state information of the earphone is acquired, in response to detecting that the audio player is in a playing state.

For example, when the user operates to play the audio by the mobile phone, if the mobile phone is connected to the earphone at this time, the audio can be played directly without special processing. However, if the mobile phone is not connected to the earphone, the audio can be usually played at first for the general audio player. At this time, it can be quickly detected that the audio is played, namely, it is detected that the audio player is in the playing state. At this time, the connection state information of the earphone can be acquired according to the detected condition that the audio player is in the playing state.

In some embodiments, the step S301 (that is, instructed audio is played, in response to receiving the audio playing instruction) can include: the instructed audio is played, in response to receiving a mirror audio playing instruction transmitted from the other associated audio play controlling device, and the mirror audio playing instruction is transmitted after the other associated audio play controlling device receives the audio playing instruction.

As such, in some embodiments, the other associated audio play controlling device can transmit the audio playing instruction to the mobile phone through an audio player mirror, in order to instruct the mobile phone to play the audio. For example, when the user is listening the audio by the other associated audio play controlling device (for example, the wearable device), the user can transmit the audio playing instruction to the audio play controlling device (for example, the mobile phone) through the audio player mirror, so that an audio play operation command is transmitted to the audio play controlling device, that is, the mobile phone can be operated to play the audio on the wearable device.

In some embodiments, the step S302 (that is, the connection state information of the earphone is acquired, in response to detecting that the audio player is in a playing state) can include: the connection state information of the earphone is acquired, in response to detect a play synchronization event transmitted from the other associated audio play controlling device.

In some embodiments, the method 300 as illustrated in FIG. 3 can further include:
a connection state of the earphone connection interface is listened, and the connection state includes whether the earphone connection interface is in a connected state and/or whether a connected device is the present device in response to the earphone connection interface being in the connected state; and
the played audio data is controlled to be output through the earphone connection interface and transmitting synchronously the playing state information to the other associated audio play controlling device, in response to the connection state information indicating that the earphone connection interface is in the connected state, or in response to the connection state information indicating that the earphone connection interface is in the connected state and the connected device is the present device.

FIG. 4 illustrates a flowchart of a method for acquiring connection state information of an earphone connection interface included in the audio play controlling method, according to some other embodiments of the present disclosure.

As illustrated in FIG. 4, in the method 400 for acquiring connection state information of the earphone connection interface, at first, in step S401, an audio play waiting signal is transmitted to make the audio player to be in a standby state, in response to receiving the audio playing instruction. Subsequently, in step S402, the connection state information of the earphone connection interface is acquired, in response to the audio player being in the standby state.

Alternatively, the audio play controlling device described above and the other associated audio play controlling device can be the wearable device and the mobile phone, respectively, and vice versa, and the mobile phone can be one or more mobile phones.

Various embodiments of the present disclosure can have, by performing the audio play controlling method described above, one or more of the following advantages.

In a case that the user listens to the audio through the audio play controlling devices (for example, the mobile phone or the wearable device), when the first audio play controlling device (for example, the mobile phone) is connected to the earphone and the audio is listened to through the earphone, if the user clicks to play an audio on the second audio play controlling device (for example, the wearable device) at the end of the second audio play controlling device, the earphone will switch automatically to the second audio play controlling device and play the audio. In a same way, it is similar when the earphone is switched from the second audio play controlling device to the first audio play controlling device. Therefore, the seamless switching of audio playing among different devices can be realized. Thus, the convenience for the users to listen to the audio by switching the devices is greatly enhanced.

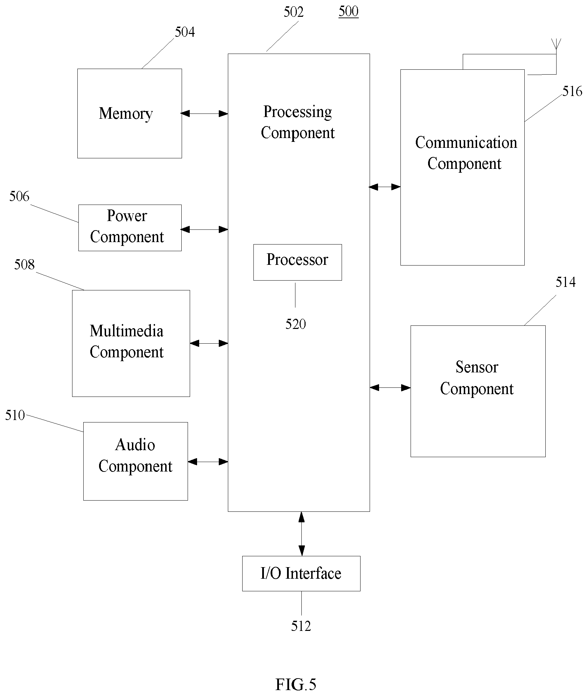

FIG. 5 illustrates a schematic diagram of a structure of an audio play controlling device, according to some embodiments of the present disclosure.

As illustrated in FIG. 5, for example, the device 500 can be a mobile phone, a computer, a digital broadcast terminal, a message transceiver, a game console, a tablet, medical equipment, fitness equipment, a personal digital assistant and the like.

Referring to FIG. 5, the device 500 can include one or more of the following components: a processing component 502, a memory device 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 can include one or more processors 520 to execute instructions to perform all or part of the steps in the above described methods. Moreover, the processing component 502 can include one or more modules which facilitate the interaction between the processing component 502 and other components. For instance, the processing component 502 can include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 can include a power management system, one or more power sources, and any other components associated with the generation, management, and distribution of power in the device 500.

The multimedia component 508 includes a screen providing an output interface between the device 500 and the user. In some embodiments, the screen can include a liquid crystal display (LCD) and a touch panel (TP). In some embodiments, organic light-emitting diode (OLED) or other types of displays can be employed.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 508 includes a front camera and/or a rear camera. The front camera and the rear camera can receive an external multimedia datum while the device 500 is in an operation mode, such as a photographing mode or a video mode. Each of the front camera and the rear camera can be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal can be further stored in the memory 504 or transmitted via the communication component 516. In some embodiments, the audio component 510 further includes a speaker to output audio signals. The I/O interface 512 provides an interface between the processing component 502 and peripheral interface modules, such as a keyboard, a click wheel, buttons, and the like. The buttons can include, but are not limited to, a home button, a volume button, a starting button, and a locking button.

The sensor component 514 includes one or more sensors to provide status assessments of various aspects of the device 500. For instance, the sensor component 514 can detect an open/closed status of the device 500, relative positioning of components, e.g., the display and the keypad, of the device 500, the sensor component 514 can also detect a change in position of the device 500 or a component of the device 500, a presence or absence of user contact with the device 500, an orientation or an acceleration/deceleration of the device 500, and a change in temperature of the device 500. The sensor component 514 can include a proximity sensor configured to detect the presence of nearby objects without any physical contact. The sensor component 514 can also include a light sensor, such as a CMOS or CCD image sensor, for use in imaging applications. In some embodiments, the sensor component 514 can also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as Wi-Fi, 2G 3G, 4G, 5G or a combination thereof. In some embodiments, the communication component 516 receives a broadcast signal or broadcast associated information from an external broadcast management system via a broadcast channel. In some embodiments, the communication component 516 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In some embodiments, the device 500 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as the memory 504 including instructions, executable by the processor 520 in the device 500, for performing the above-described methods. For example, the non-transitory computer-readable storage medium can be a ROM, a RAM, a CD-ROM, a magnetic tape, a floppy disc, an optical data storage device, and the like.

A non-transitory computer-readable storage medium enables the mobile terminal to perform the audio play controlling method as illustrated in FIGS. 1-4 and described in corresponding part of the specification, when the instructions in the storage medium is executed by the processor of the mobile terminal.

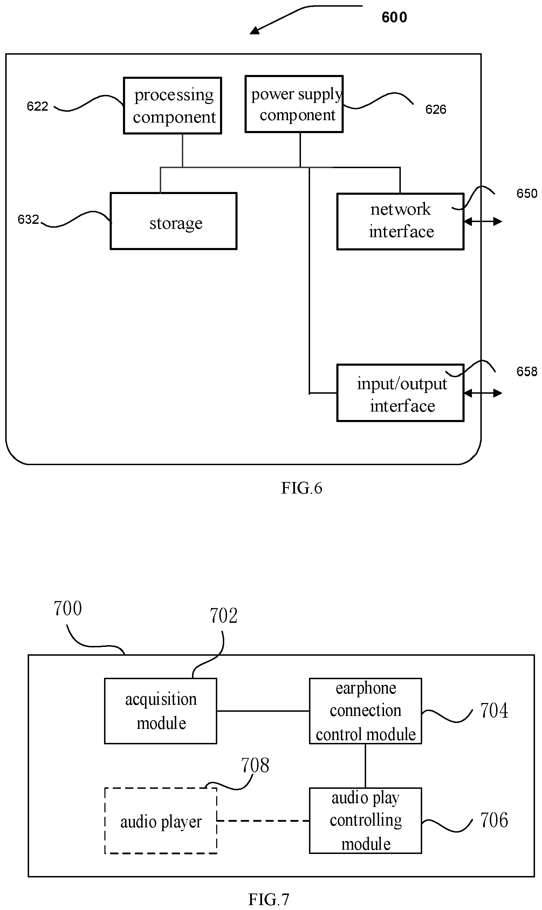

FIG 6 illustrates a schematic block diagram of a structure of an audio play controlling device, according to some other embodiments of the present disclosure.

As illustrated in FIG. 6, for example, the device 600 can be provided as a server. Referring to FIG. 6, the device 600 includes a processing component 622, which further includes one or more processors), and storage resource represented by a storage 632, for storing instructions, for example, application programs, executable by the processing component 622. The application programs stored in the storage 632 can include one or more modules each corresponding to a set of instructions. Further, the processing component 622 can be configured to execute the instructions to perform the audio play controlling method as illustrated in FIGS. 1-4 and described in corresponding part of the specification.

The device 600 can also include a power supply 626 configured to perform a power management for the device 600, a wired or wireless network interfaces 650 configured to connect the device 600 to a network, and an input/output interface 658. The device 600 can operate the operation methods stored in the storage 632, such as Windows Server^{™}, Mac OS X^{™}, Unix^{™}, Linux^{™}, FreeBSD^{™}, or the like.

FIG. 7 illustrates a schematic block diagram of a structure of an audio play controlling device, according to some embodiments of the present disclosure.

Referring to FIG. 7, the audio play controlling device 700 can include an acquisition module 702, an earphone connection control module 704 and an audio play controlling module 706. Further, the audio play controlling device 700 can include an audio player 708.

The acquisition module 702 is configured to acquire connection state information of an earphone connection interface, in response to receiving an audio playing instruction. For example, a user can determine whether an audio play controlling device (for example, a mobile phone) is connected to an earphone from the connection state information of the earphone, by acquiring the connection state information of the earphone connection interface.

The earphone connection control module 704 is configured to establish a connection with the earphone by performing an earphone connection control operation in response to the connection state information indicating that the earphone connection interface is in an unconnected state. That is to say, the connection with the earphone is established by performing the earphone connection control operation when it is known from the connection state information of the earphone that the audio play controlling device (for example, the mobile phone) is not connected to the earphone.

The audio play controlling module 706 is configured to control played audio data to be output through the earphone connection interface, and transmit playing state information to other associated audio play controlling device synchronously.

During the above operations, the audio player 708 can be controlled to perform the audio play operation and the playing state information of the audio player 708 can be transmitted to the other associated audio play controlling device synchronously. For example, a playing state of a device (for example, the mobile phone) which has been connected to the earphone can be synchronized to, for example, the wearable device through application synchronization (AppSync) in a form of application status (AppStatus). In actual applications, various states, including whether the earphone is currently connected to the audio play controlling device such as the mobile phone or the wearable device, which device the earphone is connected to and whether the earphone is worn, can be synchronized to the respective devices

In some embodiments, the acquisition module 702 can includes: a receiving sub-module configured to, in response to that the audio playing instruction instructs to acquire the audio data through a network, receive a corresponding notification message to trigger a detection of the connection state of the earphone connection interface before acquiring the connection state information of the earphone connection interface.

In some embodiments, the audio player is further configured to play the instructed audio, in response to receiving a mirror audio playing instruction transmitted from the other associated audio play controlling device, the mirror audio playing instruction is transmitted after the other associated audio play controlling device receives the audio playing instruction.

The acquisition module 702 is further configured to acquire the connection state information of the earphone, in response to detecting a play synchronization event transmitted from the other associated audio play controlling device.

In some embodiments, the device 700 further includes:
a listening sub-module configured to listen for a connection state of the earphone connection interface, including whether the earphone connection interface is in a connected state and/or whether a connected device is the present device in response to the earphone connection interface being in the connected state; and
the audio play controlling module can further be configured to: control the played audio data to be output through the earphone connection interface and transmitting synchronously the playing state information to the other associated audio play controlling device, in response to the connection state information indicating that the earphone connection interface is in the connected state, or in response to the connection state information indicating that the earphone connection interface is in the connected state and the connected device is the present device.

In some embodiments, the acquisition module 702 can further include:
a transmitting sub-module configured to transmit an audio play waiting signal to make the audio player to be in a standby state, in response to receiving the audio playing instruction; and
an acquisition sub-module configured to acquire the connection state information of the earphone connection interface, in response to the audio player being in the standby state

In some embodiments, the device is applied to the mobile phone or the wearable device; the other associated audio play controlling device is the wearable device, in response to the method being applied to the mobile phone; and the other associated audio play controlling device is the mobile phone, in response to the method being applied to the wearable device. Furthermore, the mobile phone can be one or more mobile phones.

Various embodiments of the present disclosure can have, through the audio play controlling device as shown in FIG.7, one or more of the following advantages.

In a case that the user listens to the audio through the audio play controlling devices (for example, the mobile phone or the wearable device), when the first audio play controlling device (for example, the mobile phone) is connected to the earphone and the audio is listened to through the earphone, if the user clicks to play an audio on the second audio play controlling device (for example, the wearable device) at the end of the second audio play controlling device, the earphone will switch automatically to the second audio play controlling device and play the audio. In a same way, it is similar when the earphone is switched from the second audio play controlling device to the first audio play controlling device. Therefore, the seamless switching of audio playing among different devices can be realized. Thus, the convenience for the users to listen to the audio by switching the devices is greatly enhanced.

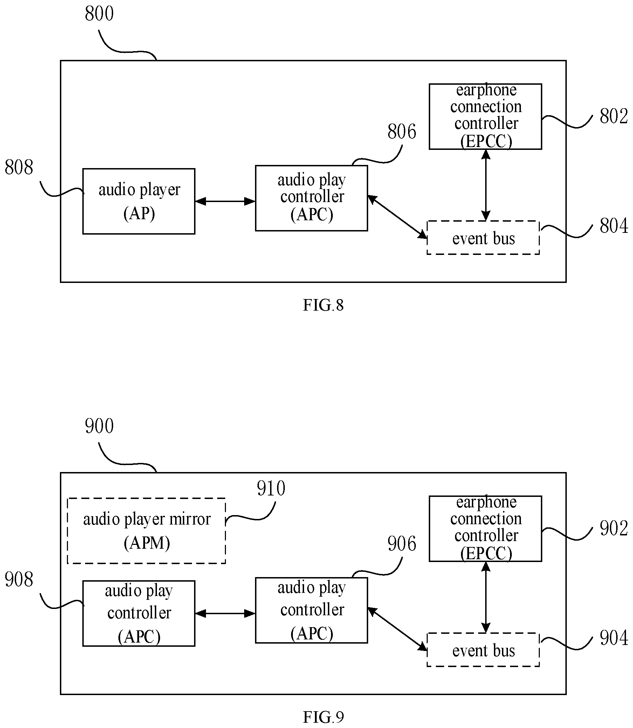

FIG. 8 illustrates a schematic block diagram of the audio play controlling device in an application scenario of mobile phone, according to an embodiment of the present disclosure.

As illustrated in FIG. 8, in the application scenario of mobile phone, the mobile phone 800 can include an earphone connection controller (EPCC) 802, an audio play controller (APC) 806 and an audio player (AP) 808. Alternatively, the mobile phone 800 can further include an event bus 804.

When the user operates to play through the mobile phone 800, if the mobile phone is connected to the earphone, the audio is played directly without any special processing. If the mobile phone is not connected to the earphone, for a general audio player, namely, a player for local audio, the audio is usually played at first. The APC 806 detects the playing of the audio quickly and then notifies the EPCC 802 to connect the earphone. When the mobile phone is connected to the earphone, the Operation System of the mobile phone can switch audio stream to the earphone automatically, and the playing of the audio can also be controlled by the earphone at this time. Regarding the playing of QQ music, for example, a notification message (for example, Intent) is firstly transmitted to the APC 806 to notify and make the APC 806 to instruct the EPCC 802 to connect to the earphone, and after the mobile phone is connected to the earphone, the APC 806 can then notify the AP 808 to play really. Afterwards, the playing state of the mobile phone is transmitted to the wearable device synchronously.

FIG. 9 illustrates a schematic block diagram of the audio play controlling device in an application scenario of wearable device, according to an embodiment of the present disclosure.

As illustrated in FIG. 9, in the application scenario of wearable device, the wearable device 900 includes an earphone connection controller (EPCC) 902, an audio play controller (APC) 906 and an audio player (AP) 908. Alternatively, the wearable device 900 can further include an audio player mirror (APM) 910. Alternatively, the wearable device 900 can further include an event bus 904. When the user operates to play through the wearable device 900, the wearable device 900 can make the mobile phone to play the audio through the audio player mirror (APM) 910, and then notifies the APC 906 of the mobile phone in a mode of event via synchronization, the APC 906 instructs the EPCC 902 to connect to the earphone. Operations of other portions are similar to those in the application scenario illustrated in FIG. 3, and will not be described repetitively.

Furthermore, similarly, the mobile phone 800 as illustrated in FIG. 8 can also include an audio play mirror (APM) whose function is similar to that of the audio player mirror (APM) 910 shown in FIG. 9, and will not be described repetitively.

As such, various embodiments of the present disclosure can have one or more of the following advantages.

When the mobile phone and the earphone of an user are connected with each other and the user listen to the audio, the user can clicks on the wearable device side to play the audio on the wearable device, and the earphone will automatically switch to the wearable device and play the audio. The same is true when switching to the mobile phone. Therefore, the seamless switching of audio playing between the wearable device and the mobile phone can be realized. Thus, the convenience for the users to listen to the audio by switching the devices is greatly enhanced.

Various embodiments of the present disclosure can have, through the audio play controlling device 700 described previously, one or more of the following advantages.

In a case that the user listens to the audio through the audio play controlling devices (for example, the mobile phone or the wearable device), when the first audio play controlling device (for example, the mobile phone) is connected to the earphone and the audio is listened to through the earphone, if the user clicks to play an audio on the second audio play controlling device (for example, the wearable device) at the end of the second audio play controlling device, the earphone will switch automatically to the second audio play controlling device and play the audio. In a same way, it is similar when the earphone is switched from the second audio play controlling device to the first audio play controlling device. Therefore, the seamless switching of audio playing among different devices can be realized. Thus, the convenience for the users to listen to the audio by switching the devices is greatly enhanced.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the scope of the disclosure defined in the following claims, the scope of which is to be accorded the broadest interpretation so as to encompass such modifications and equivalent structures.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

In the present disclosure, it is to be understood that the terms "lower," "upper," "under" or "beneath" or "underneath," "above," "front," "back," "left," "right," "top," "bottom," "inner," "outer," "horizontal," "vertical," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, a first element being "on" a second element may indicate direct contact between the first and second elements, without contact, or indirect geometrical relationship through one or more intermediate media or layers, unless otherwise explicitly stated and defined. Similarly, a first element being "under," "underneath" or "beneath" a second element may indicate direct contact between the first and second elements, without contact, or indirect geometrical relationship through one or more intermediate media or layers, unless otherwise explicitly stated and defined.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. An audio play controlling method (100), comprising:
acquiring (S101) connection state information of an earphone connection interface, in response to receiving an audio playing instruction,
**characterized in that** the method further comprises:
establishing (S102) a connection with the earphone by performing an earphone connection control operation in response to the connection state information indicating that the earphone connection interface is in an unconnected state;
controlling (S103) played audio data to be output through the earphone connection interface, and transmitting playing state information to another associated audio play controlling device synchronously;
playing the instructed audio, in response to receiving a mirror audio playing instruction transmitted from the other associated audio play controlling device, the mirror audio playing instruction being transmitted after the other associated audio play controlling device receives the audio playing instruction; and
acquiring the connection state information of the earphone, in response to detecting a play synchronization event transmitted from the other associated audio play controlling device.

2. The method (100) according to claim 1, further comprising: receiving (S201) a corresponding notification message to trigger a detection of the connection state of the earphone connection interface before acquiring the connection state information of the earphone connection interface, in response to that the audio playing instruction instructs to acquire the audio data through a network.

3. The method (100) according to claim 1, further comprising:
listening for a connection state of the earphone connection interface, the connection state including at least one of: whether the earphone connection interface is in a connected state and whether a connected device is the present device in response to the earphone connection interface being in the connected state; and
controlling the played audio data to be output through the earphone connection interface and transmitting synchronously the playing state information to the other associated audio play controlling device, in response to anyone of the connection state information indicating that the earphone connection interface is in the connected state and the connection state information indicating that the earphone connection interface is in the connected state and the connected device is the present device.

4. The method (100) according to any of claims 1 to 3, wherein the acquiring (S101)connection state information of an earphone connection interface, in response to receiving an audio playing instruction, comprises:
transmitting (S401) an audio play waiting signal to make the audio player to be in a standby state, in response to receiving the audio playing instruction; and
acquiring (S402) the connection state information of the earphone connection interface, in response to the audio player being in the standby state.

5. The method (100) according to any of claims 1 to 4, wherein the method (100) is applied to one of a mobile phone and a wearable device;
the other associated audio play controlling device is the wearable device, in a case of the method being applied to the mobile phone; and
the other associated audio play controlling device is the mobile phone, in a case of the method being applied to the wearable device.

6. An audio play controlling device (500), comprising:
memory (504) storing processor-executable instructions;
a processor (502) configured to:
acquire connection state information of an earphone connection interface, in response to receiving an audio playing instruction,
**characterized in that** the processor is configured to:
establish a connection with the earphone by performing an earphone connection control operation in response to the connection state information indicating that the earphone connection interface is in an unconnected state; and
control played audio data to be output through the earphone connection interface, and transmit playing state information to other associated audio play controlling device synchronously,
wherein the device (500) further comprises:
an audio player (708) configured to play the instructed audio in response to the audio playing instruction; and
the processor (502) is further configured to:
acquire the connection state information of the earphone, in response to detecting that the audio player (708) is in a playing state;
play the instructed audio, in response to receiving a mirror audio playing instruction transmitted from the other associated audio play controlling device (706), the mirror audio playing instruction being transmitted after the other associated audio play controlling device (706) receives the audio playing instruction; and
acquire the connection state information of the earphone, in response to detecting a play synchronization event transmitted from the other associated audio play controlling device (706).

7. The device (500) according to claim 6, wherein the processor (502) is further configured to:
receive a corresponding notification message to trigger a detection of the connection state of the earphone connection interface before acquiring the connection state information of the earphone connection interface, in response to that the audio playing instruction instructs to acquire the audio data through a network.

8. The device (500) according to claim 6, wherein the processor (502) is further configured to:
listen for a connection state of the earphone connection interface, the connection state including at least one of: whether the earphone connection interface is in a connected state and whether a connected device is the present device in response to the earphone connection interface being in the connected state; and
control the played audio data to be output through the earphone connection interface and transmitting synchronously the playing state information to the other associated audio play controlling device, in response to anyone of the connection state information indicating that the earphone connection interface is in the connected state and the connection state information indicating that the earphone connection interface is in the connected state and the connected device is the present device.

9. The device (500) according to any of claims 6 to 8, wherein the processor (502) is further configured to:
transmit an audio play waiting signal to make the audio player to be in a standby state, in response to receiving the audio playing instruction; and
acquire the connection state information of the earphone connection interface, in response to the audio player being in the standby state; and
wherein the device is applied to one of a mobile phone and a wearable device;
the other associated audio play controlling device is the wearable device, in a case of the method being applied to the mobile phone; and
the other associated audio play controlling device is the mobile phone, in a case of the method being applied to the wearable device.

10. A non-transitory computer-readable storage medium having stored thereon instructions for execution by a processing circuit to perform operations of the method of any of claims 1-5.

11. A electronics device set system comprising an earphone, a mobile phone, and a wearable device; wherein:
one of the mobile phone or the wearable device is configured connected to the earphone to control playing the audio on the earphone; implementing the audio play controlling method of claim 1 and
upon an instruction is received at another one of the mobile phone or the wearable device, the earphone is configured to switch automatically to the other one of the mobile phone or the wearable device to be controlled playing the audio thereby realizing seamless switching of audio playing among different devices.

## Patentansprüche

1. Audiowiedergabesteuerverfahren (100) mit dem Schritt:
Erfassen (S101) von Verbindungszustandsinformationen eines Ohrhörerverbindungsinterface in Reaktion auf das Empfangen eines Audiowiedergabebefehls,
**dadurch gekennzeichnet, dass** das Verfahren ferner die folgenden Schritte aufweist:
Herstellen (S102) einer Verbindung mit dem Ohrhörer durch Ausführen einer Ohrhörerverbindungssteueroperation in Reaktion darauf, dass die Verbindungszustandsinformationen angeben, dass sich das Ohrhörerverbindungsinterface in einem nicht verbundenen Zustand befindet;
Steuern (S103) wiedergegebener Audiodaten zur Ausgabe durch das Ohrhörerverbindungsinterface, und synchrones Übertragen von Wiedergabezustandsinformationen an eine andere zugehörige Audiowiedergabesteuervorrichtung;
Wiedergeben des angewiesenen Tons in Reaktion auf einen von der einen anderen zugehörigen Audiowiedergabesteuervorrichtung gesendeten Spiegel-Audiowiedergabebefehl, wobei der Spiegel-Audiowiedergabebefehl gesendet wird, nachdem die andere zugehörige Audiowiedergabesteuervorrichtung den Audiowiedergabebefehl empfangen hat; und
Erfassen der Verbindungszustandsinformationen des Ohrhörers in Reaktion auf das Erkennen eines von der anderen zugehörigen Audiowiedergabesteuervorrichtung übertragenen Wiedergabesynchronisationsereignisses.

2. Verfahren (100) nach Anspruch 1, ferner mit dem Schritt: in Reaktion darauf, dass der Audiowiedergabebefehl das Erfassen der Audiodaten durch ein Netzwerk anweist, Empfangen (S201) einer entsprechenden Mitteilungsnachricht, um ein Erkennen des Verbindungszustands des Ohrhörerverbindungsinterface vor dem Erfassen der Verbindungszustandsinformationen des Ohrhörerverbindungsinterface auszulösen.

3. Verfahren (100) nach Anspruch 1, ferner mit den Schritten:
Hören nach einem Verbindungszustand des Ohrhörerverbindungsinterface, wobei der Verbindungszustand aufweist: ob sich das Ohrhörerverbindungsinterface in einem verbundenen Zustand befindet und/oder, in Reaktion darauf, dass sich das Ohrhörerverbindungsinterface im verbundenen Zustand befindet, ob eine verbundene Vorrichtung die aktuelle Vorrichtung ist;
Steuern der wiedergegebenen Audiodaten zur Ausgabe durch das Ohrhörerverbindungsinterface und synchrones Übertragen der Wiedergabezustandsinformationen an die andere zugehörige Audiowiedergabesteuervorrichtung in Reaktion darauf, dass die Verbindungszustandsinformationen angeben, dass sich das Ohrhörerverbindungsinterface im verbundenen Zustand befindet, oder die Verbindungszustandsinformationen angeben, dass sich das Ohrhörerverbindungsinterface im verbundenen Zustand befindet und die verbundene Vorrichtung die aktuelle Vorrichtung ist.

4. Verfahren (100) nach einem der Ansprüche 1 bis 3, bei welchem das Erfassen (S103) von Verbindungszustandsinformationen eines Ohrhörerverbindungsinterface in Reaktion auf das Empfangen eines Audiowiedergabebefehls die folgenden Schritte aufweist:
Senden (S401) eines Audiowiedergabewartesignals, um den Audioplayer in Reaktion auf den Empfang des Audiowiedergabebefehls in einen Standby-Zustand zu versetzen; und
Erfassen (S402) der Verbindungszustandsinformationen des Ohrhörerverbindungsinterface in Reaktion darauf, dass sich der Audioplayer im Standby-Modus befindet.

5. Verfahren (100) nach einem der Ansprüche 1 bis 4, bei welchem das Verfahren (100) auf ein Mobiltelefon oder eine tragbare Vorrichtung angewendet wird;
wobei die andere zugehörige Audiowiedergabesteuervorrichtung die tragbare Vorrichtung ist, wenn das Verfahren auf ein Mobiltelefon angewendet wird; und
wobei die die andere zugehörige Audiowiedergabesteuervorrichtung das Mobiltelefon ist, wenn das Verfahren auf die tragbare Vorrichtung angewendet wird.

6. Audiowiedergabesteuervorrichtung (500) mit:
einem Speicher (504), welcher prozessor-ausführbare Befehle speichert;
einem Prozessor (502), der dazu ausgebildet ist,
Verbindungszustandsinformationen eines Ohrhörerverbindungsinterface in Reaktion auf das Empfangen eines Audiowiedergabebefehls zu erfassen,
**dadurch gekennzeichnet, dass** der Prozessor dazu ausgebildet ist,
eine Verbindung mit dem Ohrhörer durch Ausführen einer Ohrhörerverbindungssteueroperation in Reaktion darauf herzustellen, dass die Verbindungszustandsinformationen angeben, dass sich das Ohrhörerverbindungsinterface in einem nicht verbundenen Zustand befindet;
wiedergegebene Audiodaten zur Ausgabe durch das Ohrhörerverbindungsinterface zu steuern, und Wiedergabezustandsinformationen an eine andere zugehörige Audiowiedergabesteuervorrichtung synchron zu übertragen;
wobei die Vorrichtung (500) ferner aufweist:
einen Audioplayer (708), der zum Wiedergeben des angewiesenen Tons in Reaktion auf einen von der eine anderen zugehörigen Audiowiedergabesteuervorrichtung gesendeten Spiegel-Audiowiedergabebefehl ausgebildet ist, wobei der Spiegel-Audiowiedergabebefehl gesendet wird, nachdem die andere zugehörige Audiowiedergabesteuervorrichtung den Audiowiedergabebefehl empfangen hat; und
wobei der Prozessor (502) ferner dazu ausgebildet ist,
die Verbindungszustandsinformationen des Ohrhörers in Reaktion darauf zu erfassen, dass sich der Audioplayer (708) in einem Wiedergabezustand befindet;
den angewiesenen Ton in Reaktion auf den Empfang eines von der einen anderen zugehörigen Audiowiedergabesteuervorrichtung (706) gesendeten Spiegel-Audiowiedergabebefehl wiederzugeben, wobei der Spiegel-Audiowiedergabebefehl gesendet wird, nachdem die andere zugehörige Audiowiedergabesteuervorrichtung den Audiowiedergabebefehl empfangen hat; und
die Verbindungszustandsinformationen des Ohrhörers in Reaktion auf das Erkennen eines von der anderen zugehörigen Audiowiedergabesteuervorrichtung (706) übertragenen Wiedergabesynchronisationsereignisses.

7. Vorrichtung (500) nach Anspruch 6, bei welcher der Prozessor (502) ferner dazu ausgebildet ist, in Reaktion darauf, dass der Audiowiedergabebefehl das Erfassen der Audiodaten durch ein Netzwerk anweist, eine entsprechende Mitteilungsnachricht zu empfangen, um eine Erfassung des Verbindungszustands des Ohrhörerverbindungsinterface vor dem Erfassen der Verbindungszustandsinformationen auszulösen.

8. Vorrichtung (500) nach Anspruch 6, bei welcher der Prozessor (502) ferner dazu ausgebildet ist,
nach einem Verbindungszustand des Ohrhörerverbindungsinterface zu hören, wobei der Verbindungszustand aufweist: ob sich das Ohrhörerverbindungsinterface in einem verbundenen Zustand befindet und/oder, in Reaktion darauf, dass sich das Ohrhörerverbindungsinterface im verbundenen Zustand befindet, ob eine verbundene Vorrichtung die aktuelle Vorrichtung ist;
die wiedergegebenen Audiodaten zur Ausgabe durch das Ohrhörerverbindungsinterface zu steuern und die Wiedergabezustandsinformationen an die andere zugehörige Audiowiedergabesteuervorrichtung in Reaktion darauf synchron zu übertragen, dass die Verbindungszustandsinformationen angeben, dass sich das Ohrhörerverbindungsinterface im verbundenen Zustand befindet, oder die Verbindungszustandsinformationen angeben, dass sich das Ohrhörerverbindungsinterface im verbundenen Zustand befindet und die verbundene Vorrichtung die aktuelle Vorrichtung ist.

9. Vorrichtung (500) nach einem der Ansprüche 6 bis 8, bei welcher der Prozessor (502) ferner dazu ausgebildet ist,
ein Audiowiedergabewartesignal zu steuern, um den Audioplayer in Reaktion auf den Empfang des Audiowiedergabebefehls in einen Standby-Zustand zu versetzen; und
Verbindungszustandsinformationen des Ohrhörerverbindungsinterface in Reaktion darauf zu erfassen, dass sich der Audioplayer im Standby-Modus befindet; und
wobei die Vorrichtung auf ein Mobiltelefon oder eine tragbare Vorrichtung angewendet wird;
wobei die andere zugehörige Audiowiedergabesteuervorrichtung die tragbare Vorrichtung ist, wenn das Verfahren auf ein Mobiltelefon angewendet wird; und
wobei die die andere zugehörige Audiowiedergabesteuervorrichtung das Mobiltelefon ist, wenn das Verfahren auf die tragbare Vorrichtung angewendet wird.

10. Nichtflüchtiges computerlesbares Speichermedium mit darauf gespeicherten Befehlen zum Ausführen durch eine Verarbeitungsschaltung, um Operationen des Verfahrens nach einem der Ansprüche 1-5 durchzuführen.

11. Elektronikvorrichtungsset-System mit einem Ohrhörer, einem Mobiltelefon, und einer tragbaren Vorrichtung, bei welchem:
das Mobiltelefon oder die tragbare Vorrichtung zur Verbindung mit dem Ohrhörer ausgebildet ist, um die Wiedergabe des Tons auf dem Ohrhörer zu steuern, wobei das Audiowiedergabeverfahren nach Anspruch 1 implementiert wird; und
der Ohrhörer dazu ausgebildet ist, bei Empfang eines Befehls an dem anderen Gerät, dem Mobiltelefon oder der tragbaren Vorrichtung, automatisch zu dem anderen Gerät, dem Mobiltelefon oder der tragbaren Vorrichtung, zu wechseln, um dieses zur Audiowiedergabe zu steuern, wodurch ein nahtloser Wechsel der Audiowiedergabe zwischen verschiedenen Vorrichtungen realisiert wird.

## Revendications

1. Procédé de commande de lecture audio (100), comprenant :
l'acquisition (S101) d'informations sur l'état de connexion d'une interface de connexion d'écouteur, en réponse à la réception d'une instruction de lecture audio,
**caractérisé en ce que** le procédé comprend en outre :
l'établissement (S102) d'une connexion avec l'écouteur en effectuant une opération de commande de la connexion d'écouteur en réponse aux informations sur l'état de connexion indiquant que l'interface de connexion d'écouteur est dans un état non connecté ;
la commande (S103) des données audio lues devant être émises via l'interface de connexion d'écouteur, et la transmission de manière synchrone des informations sur l'état de lecture à un autre dispositif de commande de lecture audio associé ;
la lecture de l'audio instruit, en réponse à la réception d'une instruction de lecture audio miroir transmise à partir de l'autre dispositif de commande de lecture audio associé, l'instruction de lecture audio miroir étant transmise après que l'autre dispositif de commande de lecture audio associé a reçu l'instruction de lecture audio ; et
l'acquisition des informations sur l'état de connexion de l'écouteur, en réponse à la détection d'un événement de synchronisation de lecture transmis à partir de l'autre dispositif de commande de lecture audio associé.

2. Procédé (100) selon la revendication 1, comprenant en outre : la réception (S201) d'un message de notification correspondant pour déclencher une détection de l'état de connexion de l'interface de connexion d'écouteur avant l'acquisition des informations sur l'état de connexion de l'interface de connexion d'écouteur, en réponse au fait que l'instruction de lecture audio demande d'acquérir les données audio via un réseau.

3. Procédé (100) selon la revendication 1, comprenant en outre :
l'écoute d'un état de connexion de l'interface de connexion d'écouteur, l'état de connexion comportant au moins l'un parmi : si l'interface de connexion d'écouteur est dans un état connecté et si un dispositif connecté est le dispositif présent en réponse à l'interface de connexion d'écouteur étant dans l'état connecté ; et
la commande des données audio lues devant être émises via l'interface de connexion d'écouteur et la transmission de manière synchrone des informations sur l'état de la lecture à l'autre dispositif de commande de lecture audio associé, en réponse à l'une des informations sur l'état de connexion indiquant que l'interface de connexion d'écouteur est dans l'état connecté et aux informations sur l'état de connexion indiquant que l'interface de connexion d'écouteur est dans l'état connecté et que le dispositif connecté est le présent dispositif.

4. Procédé (100) selon l'une quelconque des revendications 1 à 3, dans lequel l'acquisition (S101) des informations sur l'état de connexion d'une interface de connexion d'écouteur, en réponse à la réception d'une instruction de lecture audio, comprend :
la transmission (S401) d'un signal d'attente de lecture audio pour mettre le lecteur audio dans un état de veille, en réponse à la réception de l'instruction de lecture audio ; et
l'acquisition (S402) des informations sur l'état de connexion de l'interface de connexion d'écouteur, en réponse au lecteur audio étant dans l'état de veille.

5. Procédé (100) selon l'une quelconque des revendications 1 à 4, dans lequel le procédé (100) est appliqué à l'un parmi un téléphone mobile et un dispositif portable ;
l'autre dispositif de commande de lecture audio associé est le dispositif portable, dans le cas où le procédé est appliqué au téléphone mobile ; et
l'autre dispositif de commande de lecture audio associé est le téléphone mobile, dans le cas où le procédé est appliqué au dispositif portable.

6. Dispositif de commande de lecture audio (500), comprenant :
une mémoire (504) stockant des instructions exécutables par le processeur ;
un processeur (502) configuré pour :
acquérir des informations sur l'état de connexion d'une interface de connexion d'écouteur, en réponse à la réception d'une instruction de lecture audio,
**caractérisé en ce que** le processeur est configuré pour :
établir une connexion avec l'écouteur en effectuant une opération de commande de la connexion d'écouteur en réponse aux informations sur l'état de connexion indiquant que l'interface de connexion d'écouteur est dans un état non connecté ; et
commander les données audio lues devant être émises via l'interface de connexion d'écouteur, et transmettre de manière synchrone des informations sur l'état de lecture à un autre dispositif de commande de lecture audio associé,
dans lequel le dispositif (500) comprend en outre :
un lecteur audio (708) configuré pour lire l'audio instruit en réponse à l'instruction de lecture audio ; et
le processeur (502) est configuré en outre pour :
acquérir les informations sur l'état de connexion d'écouteur, en réponse à la détection que le lecteur audio (708) est dans un état de lecture ;
lire l'audio instruit, en réponse à la réception d'une instruction de lecture audio miroir transmise à partir de l'autre dispositif de commande de lecture audio associé (706), l'instruction de lecture audio miroir étant transmise après que l'autre dispositif de commande de lecture audio associé (706) a reçu l'instruction de lecture audio ; et
acquérir les informations sur l'état de connexion d'écouteur, en réponse à la détection d'un événement de synchronisation de lecture transmis à partir de l'autre dispositif de commande de lecture audio associé (706).

7. Dispositif (500) selon la revendication 6, dans lequel le processeur (502) est configuré en outre pour :
recevoir un message de notification correspondant pour déclencher une détection de l'état de connexion de l'interface de connexion d'écouteur avant l'acquisition des informations sur l'état de connexion de l'interface de connexion d'écouteur, en réponse au fait que l'instruction de lecture audio demande d'acquérir les données audio à travers un réseau.

8. Dispositif (500) selon la revendication 6, dans lequel le processeur (502) est configuré en outre pour :
écouter un état de connexion de l'interface de connexion d'écouteur, l'état de connexion comportant au moins l'un parmi : si l'interface de connexion d'écouteur est dans un état connecté et si un dispositif connecté est le présent dispositif en réponse à l'interface de connexion d'écouteur étant dans l'état connecté ; et
commander les données audio lues devant être émises via l'interface de connexion d'écouteur et la transmission de manière synchrone des informations sur l'état de la lecture à l'autre dispositif de commande de lecture audio associé, en réponse à l'une des informations sur l'état de connexion indiquant que l'interface de connexion d'écouteur est dans l'état connecté et aux informations sur l'état de connexion indiquant que l'interface de connexion d'écouteur est dans l'état connecté et que le dispositif connecté est le présent dispositif.

9. Dispositif (500) selon l'une quelconque des revendications 6 à 8, dans lequel le processeur (502) est configuré en outre pour :
transmettre un signal d'attente de lecture audio pour mettre le lecteur audio dans un état de veille, en réponse à la réception de l'instruction de lecture audio ; et
acquérir les informations sur l'état de connexion de l'interface de connexion d'écouteur, en réponse au lecteur audio étant dans l'état de veille ; et
dans lequel le dispositif est appliqué à l'un parmi un téléphone mobile et un dispositif portable ;
l'autre dispositif de commande de lecture audio associé est le dispositif portable, dans le cas où le procédé est appliqué au téléphone mobile ; et
l'autre dispositif de commande de lecture audio associé est le téléphone mobile, dans le cas où le procédé est appliqué au dispositif portable.

10. Support de stockage non transitoire lisible par ordinateur sur lequel sont stockées des instructions destinées à être exécutées par un circuit de traitement afin de réaliser les opérations du procédé selon l'une quelconque des revendications 1-5.

11. Système d'ensemble de dispositifs électroniques comprenant un écouteur, un téléphone mobile et un dispositif portable ; dans lequel :
l'un parmi le téléphone mobile ou le dispositif portable est configuré pour être connecté à l'écouteur afin de commander la lecture de l'audio sur l'écouteur ; mettre en œuvre le procédé de commande de lecture audio selon la revendication 1 et
lorsqu'une instruction est reçue sur un autre parmi le téléphone mobile ou le dispositif portable, l'écouteur est configuré pour passer automatiquement à l'autre parmi le téléphone mobile ou le dispositif portable afin de commander la lecture de l'audio, réalisant de ce fait une commutation transparente de la lecture de l'audio entre différents dispositifs.
